# EUROPEAN PATENT APPLICATION

(11) **EP 4 310 620 A2**
(43) Date of publication of application: **24.01.2024**
(21) Application number: 23213431.2
(22) Date of filing: 17.11.2021
(51) Int. Cl.: G05B 23/02

(54) **HYBRID ENSEMBLE APPROACH FOR IOT PREDICTIVE MODELLING**

(30) Priority: 10.12.2020 US 202017117153
(62) Divisional of application: 21824200.6
(71) Applicant: Caterpillar Inc., Peoria, IL 61629-9510 (US)
(72) Inventor: KHURSHUDOV, Andrei, Longmont, 80503-7261 (US); JEWELL, Tyler P., Chicago, 60607-5101 (US); SMITH, Zachary D., Chicago, 60654-0010 (US); LIN, David J., Peoria, 61614 (US)
(74) Representative: Boult Wade Tennant LLP

(57) **Abstract**

A computer implemented method for predicting equipment failure by monitoring equipment data, the method comprising: generating a first set of predictions by processing equipment data via a plurality of first models of data analysis and machine learning techniques; generating a second set of predictions by processing equipment data via a plurality of second models of data analysis and machine learning techniques; generating, using machine learning techniques, a consensus decision by comparing the first set of predictions and the second set of predictions; estimating, using machine learning techniques, a level of confidence for the consensus decision; and selectively disclosing the consensus decision qualifying a confidence threshold.

## Description

### Technical Field

The present disclosure relates to validation of analytics models. In addition, the present disclosure relates to a system for on-boarding and validating analytics models in a crowdsourcing environment.

### Background

Many industries such as mining, construction, manufacturing, transportation, production, telecommunications, health care, pharmaceuticals, finance, and public health, generate massive amounts of data regarding their respective products and consumer interaction with these products. In the construction industry, for example, a business may typically use a variety of systems to control various equipment such as wheel loaders, motor graders, planers, servers, routers, an array of work equipment, and other types of machinery to perform a variety of industry specific tasks. The systems may conduct surveillance to capture large data, perform analytic operations to interpret the captured data for system maintenance, management, and strategic planning.

Collectively, this combination of the systems and equipment generate substantial streams of raw data containing abundant information pertaining to industries' systems and equipment. The raw data often contains complex patterns and useful correlations. Analyzing big data streams, which have customarily been untapped and inaccessible, may generate new insights into systems and equipment based on the data stream for its particular industry. These new insights may aide in optimizing resources for many functions such as, monitoring and surveillance, fault detection and diagnostics, prediction and forecasting, engineering management, supply chain management and other meaningful functions. Additionally, these insights may lead to better and faster decisions pertaining to the aforementioned functions.

Typically, at any given time, one of the many available types of analytics models is used to interpret the captured raw data to generate correlated data that can be used for various purposes. For example, corelated data can be used for monitoring health and predicting failures of many IoT (Internet of Things) devices and machines. This is of paramount importance in current times which are often referred to as the age of the 4th Industrial Revolution.

Systems which communicate, either directly or indirectly, with equipment often include connected devices such as sensors. Connected devices, may be situated within a machine, for example, and generate sensor data that can be monitored to determine machine health conditions. The generated data can be interpreted directly by an operator viewing and addressing various alert indicating system health conditions, e.g., "Critical temperature exceeded specification." Alternatively, a machine health condition can also be interpreted by directing the sensor data which indicates machine health, into an analytic model that can transform the raw sensor data into a machine health status indicator.

A traditional approach to `health modeling' typically involves two types of analytics solutions, the first being a physics-based analytics model and the second being a statistical analytics model. A common practice for software and computer engineers typical engineer who desires to create a model to process IoT sensor data and predict device health status would use either physics-based modeling or statistical modeling.

Using a single IoT health analysis and prediction model often results in inaccurate failure detection/prediction and an elevated rate of false positives, where failure alerts are generated without the underlying facts justifying or substantiating generation of failure warnings. The number of accurate failure notifications issued by an analytic model depends not only upon the analytics model's ability to detect/predict real failures but also upon the analytics model's ability to filter out false failure notification indicators.

The ability to distinguish between real failures and false alarms is contingent upon the manner in which data is processed by an analytics engine. In other words, reporting non-failure instances as failure instances adversely reflects upon the quality of predictions issued by such model.

U.S. Patent Application No. US10/092,491 ("the `491 patent application") by James et al., filed on March, 6th, 2002 discloses a method for diagnosis and prognosis of system performance, errant system conditions, and abnormal system behavior in an instrumented system. While this application describes a generalized formalism for diagnostics and prognostics in an instrumented system which can provide sensor data and discrete system variable takes into consideration all standard forms of data, both time-varying (sensor or extracted feature) quantities and discrete measurements, embedded physical and symbolic models, and communication with other autonomy-enabling components, this application does not disclose predicting failures by combining physical and statistical models.

### Summary of the Invention

The disclosed system for predicting failure by monitoring equipment health comprising: generating a first set of predictions by processing equipment data via a plurality of first model of data analysis; generating a second set of predictions by processing equipment data via a plurality of second model of data analysis; generating a consensus decision after comparing the first set of predictions and the second set of predictions; statistical data analysis may use outcomes, timing, probabilities, etc. to generate a estimating the level of confidence for the consensus decision ; and selectively reporting consensus decision that qualifies a confidence threshold while not disclosing predictions of physical model data analysis results and statistical data analysis results.

A method of fault diagnostics is suggested using a physical model and a statistical model (including machine learning (ML) and artificial intelligence (AI) models). Typically, in practice, individual models suffer from lower performance in both areas, given that no single analytic model, by itself is perfect. By combining a physical model and a statistical model, a `hybrid ensemble of models' each operating on different principles is created and possesses higher detection accuracy with lower rate of false positives.

These and other features, aspects, and embodiments of the invention are described below in the section entitled "Detailed description."

### Brief Description of the Drawings

FIG. 1 displays a flow chart depicting a process flow of one embodiment of the disclosed invention.
FIG. 2 indicates a process flow according to one embodiment of the disclosed invention.
FIG. 3 illustrates a process flow according to another embodiment of the disclosed invention.
FIG. 4 depicts a manner in which physical data analysis is performed.
FIG. 5 represents a manner in which statistical data analysis is performed.
FIG. 6 shows the system diagram according to one embodiment of the disclosed invention.
FIG. 7 indicates a manner in which a set of related parameters is processed.

### Detailed Description

### Why Ensemble:

Proposed is a model which is referred to as "Ensemble Model" for monitoring events of interest such as health monitoring and equipment failure prediction for Internet of Things (IoT) devices and machines. This monitoring is of paramount importance in the age of the 4th Industrial revolution.

A worksite or a production site often includes an extensive amount of equipment and for the sake of clarity equipment may be defined as one or more machines performing a multitude of tasks. Each machine is configured to generate sensor data indicating various parameter attributes. Worksite machine performance can be continuously monitored in real time via the worksite machine parameter attributes.

In one embodiment a computer implemented method is disclosed for predicting equipment failure by monitoring equipment data, the method comprising: generating a first set of predictions by processing equipment data via a plurality of first models of data analysis and machine learning techniques. In this context, the term "predictions" indicates anomaly detection, wherein a machine fault or failure is predicted in advance or before the failure or failure occurs at the machine.

The method further comprises: generating a second set of predictions by processing equipment data via a plurality of second models of data analysis and machine learning techniques; generating, using machine learning techniques, a consensus decision by comparing the first set of predictions and the second set of predictions; estimating, using machine learning techniques, a level of confidence for the consensus decision; and selectively disclosing the consensus decision qualifying a confidence threshold.

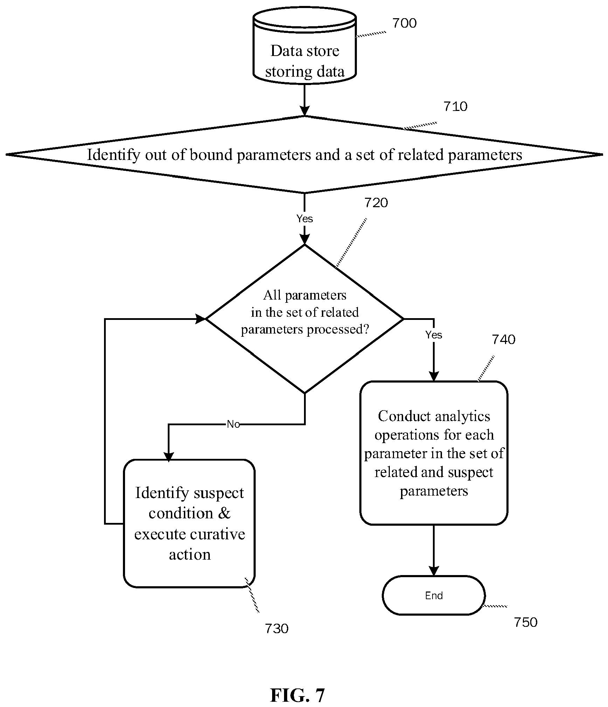

In an embodiment of the disclosed invention, a database 700 shown in FIG. 7, is maintained, such that, for each machine on a worksite, an associated list of parameters is maintained. Additionally, the database also contains a suitable range of values for each of the lists of parameters. The suitable or acceptable range of values comprise a lowest acceptable value (a minimum value), and a highest acceptable upper value (a maximum value). For a given machine, all the values that are greater than or equal to the minimum value and less than or equal to the maximum value are considered to be within the acceptable value range. In this embodiment, no alert or notification is generated as long as parameter values stay within the acceptable value range.

Normally, for a given machine, the physical attributes and the associated state of the given machine can provide sufficient information about the functioning of the given machine. This information may provide a basis for alert notification or in other terms raising a flag relative to undesirable or poor performance of the given machine.

On the other hand, the statistical analytics model-based analysis for a given machine will use the mathematical principles. For example, the statistical analytics model may use the theory of probability for analysis and interpretation of a collection of numerical data representing the manner in which the given machine is functioning. In other words, after examining a characteristic of random samples, mathematical principles are used for drawing inferences about characteristics of a fleet of machines.

In manual operation mode, in order to process input from the sensor monitoring temperature data for a given machine, the machine may be configured to monitor the machine `health' status by having an operator interpreting data directly (e.g., "Critical temperature exceeded specification"). Upon receiving this alert notification, operator may take a corrective action such as "Stop the equipment". As for determining the exact course of curative action, being a manually orchestrated operation, the operator may make the determination either based on his/her judgment or may reach out to experts either internal or external to the operator organization.

In a preferred embodiment of the disclosed embodiment of the disclosed invention the statistical model of data analysis conducts data analysis based at least on an event start time, an event end time, an event duration time, an event outcome, an event probability, and an occurrence of a connected event. An event database, which can be a part of data store 700, may store a list of event data for a plurality of events, such as for a given event the data store may contain information such as a start time, an end time, an event duration time, an event outcome, an event probability, and an occurrence of a connected event. This information, along with other statistical data, can provide at least in part, a basis for anomaly detection.

Alternatively, a database search can be conducted to identify the previous instances where similar temperature trends for the given equipment were encountered. The database search may also reveal previously adopted curative course of action and outcome thereof. The previously adopted curative course of action may be selectively adopted or ignored, based on the outcome of the curative course of action. If selected, the operator may selectively eliminate the historic course of action likely if the operator perceives that it is not bringing about desired results.

Options implicating the use of seeking expert opinion and conducting a database search, may be time consuming. Time delays are common with systems relying on detection of problematic symptoms following steps to resolve the underlying issue. Various data processing models may be applied to minimize time delays. For example, equipment sensor data maybe passed through a data analytics model for analyzing equipment data to identify equipment health status. Traditionally, `equipment health modeling' may involve using a physics-based analytics model or a statistics-based analytics model.

Additionally, a physics-based model or a statistics-based model may be used to process Internet of Things (IoT) sensor data and predict device health status.

For any single analytics model, the quality of a given analytics model is contingent upon the given analytics model's ability to: (1) detect instances indicating occurrence of real issues, (2) distinguish between instances indicating the occurrence of issues and instances indicating the occurrence of non-issues, and (3) report the instances indicating the occurrence of issues and ignore the instances indicating the occurrence of non-issues. In this context, the term "issue" indicates an imminent and critical instance of fault or failure associated with a machine. Similarly, the term "non-issue" indicates an appearance of benign and trivial instance of fault or failure associated with a machine. Typically, singular models work in isolation and as such, they commonly have low accuracy when detecting instances indicating the occurrence of issue, or the occurrence of non-issue.

In one embodiment of the disclosed invention, this embodiment combines multiple analytics models to create a `hybrid ensemble of models' that possess higher fault detection accuracy with a lower rate of false positives.

In another embodiment of the disclosed invention, a hybrid ensemble of models may be formulated by combining multiple analytics models that are all respectively different. In yet another embodiment of the disclosed invention, a hybrid ensemble of models may be formulated by combining models that exhibit a portion of the models being fundamentally opposite. For example a hybrid ensemble of models may be formulated by combining a physical analytics model with a statistical analytics model.

Generally, physical models are domain-driven. Accuracy of a physical model often depends upon the model-creator's ability to mathematically describe the physical attributes of objects used in the model. In one embodiment of the disclosed invention, physical models may characterize the model parameters based on information provided by an object manufacturer. Domain knowledge may also be secured via feedback received from a user community. Domain knowledge can range from generic and vague to specific and precise. Advantageously, greater specificity relative to the domain knowledge will increase the effectivity of the physical analytics model.

Physical models offer several advantages, for example, the results of physical analytics models can be interpreted by human observation. Additionally, physical analytics models may offer the capability to improve the model efficiency and prediction accuracy by increasing the domain expertise. Furthermore, the physical analytics model offers an avenue whereby a model can be created without having to archive data from a plant. In another exemplary embodiment, a hybrid ensemble of models may be formulated by combining multiple models, such as three or more models.

Similarly, statistical models offer several advantages. Statistical analytics models (including machine learning (ML) and artificial intelligence (AI) models) may objectively conduct data analysis to identify trends and to quantify data attributes. Statistical analytics models may, additionally summarize data based on the quantified data attributes to indicate data distribution or other data characteristics. The unbiased and data backed summarization offered by statistical data analytics models may provide a solid foundation to make an informed decision.

Statistical models (including machine learning (ML) and artificial intelligence (AI) models) may present a frame of reference to explain the magnitude of differences between various data attributes. Additionally, the statistical models may indicate various types of relationships among different data attributes and also indicate their respective strengths. Likewise, the statistical models may determine results of statistical analysis and substantiate a prediction based on the results.

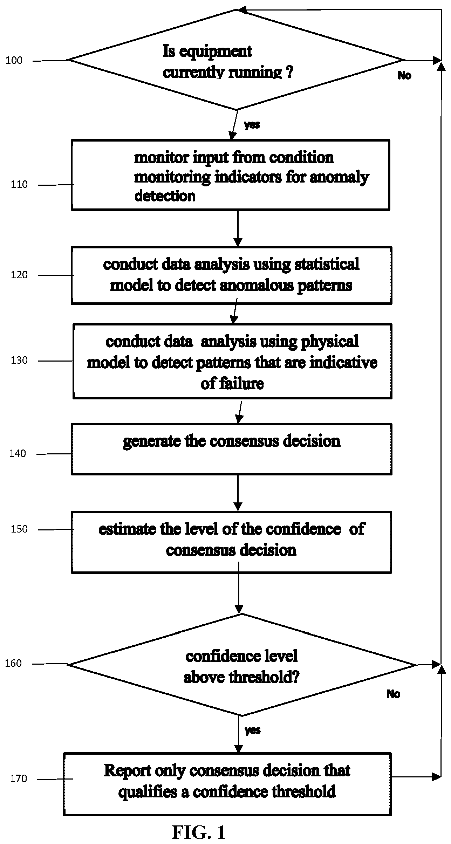

Now referring to FIG. 1, describing process flow of one embodiment of the disclosed invention. The process begins at block 100 where the system determines if a given machine is in a running state. If the machine is in the running state, then the process moves to block 110 to monitor various indicators from condition monitoring software for anomaly detection. The condition monitoring indicators (CMI) that indicate health condition of a given machine, are trained using statistics, machine learning, and artificial intelligence to conduct a pre-check of various parameter values to ensure that the parameter values are within an acceptable range.

If it is determined at block 100 that the machine is not currently running, then instead of proceeding to block 110, the process iteratively moves back to block 100 to determine if the machine has started functioning. In other words, the process iteratively returns to block 100 until the machine switches from an idle state to a running state.

As was previously mentioned, from block 100 the process moves to block 110 to monitor input from CMI for anomaly detection. The process may move to block 120 to conduct data analysis using statistical analytics model (including ML and AI models for anomaly detection. Thereafter, the process moves to block 130 to conduct data analysis using a physical analytics model for predicting failure. At block 140, the process may generate a consensus decision. The consensus decision may indicate a suggested course of action for curing the anomalous patterns and/or the failure indicators.

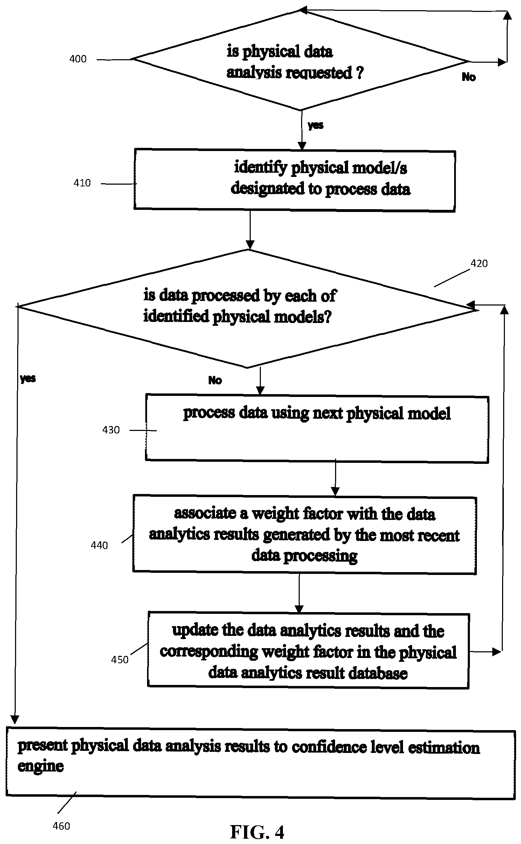

The manner in which the consensus decision is made is further described in conjunction with Fig 4. In one embodiment of the disclosed invention, the physical parameters are evaluated by an artificial intelligence engine to identify a suspect condition which likely caused the display of anomalous patterns or failure indicating patterns.

For each machine on a worksite, the physical analytics model processes physical data for each parameter associated with the given equipment. Physical data may comprise, in addition to other physical attributes, a parameter value, an upper threshold value, a lower threshold value, and bit state information.

When the parameter value is less than or equal to an upper threshold value AND when the parameter value is equal to or greater than the lower threshold value, then the bit state is set to ` 1' or 'true'. By default, the value of bit state is set to '1' or 'true'. However, when the parameter value, as indicated by sensor data is more than the upper threshold value OR when the parameter value is less than the lower threshold value, then the bit state is set to '0' or 'false'. Likewise, by default a bit switch parameter is set to '0' or 'false'. As described above, when the value of bit state is changed from true to false, the bit switch parameter is set to ` 1' or 'true'. This process is called a bit switch operation.

Further, physical data associated with each parameter is processed by an artificial intelligence engine to: (1) identify a parameter for which a bit switch is observed, (2) identify at least one suspect factor causing the bit switch (which may be a reason for causing the bit switch), (3) identify, for at least one suspect factor, a set of related factors by running the at least one suspect factor through the statistical analytics model to identify a set of related factors, (4) the suspect factor is again run through the physical analytic model to extract a bit switch information for suspect factor, (5) the suspect factor is processed by athe artificial intelligence engine to conduct a root cause analysis to determine if the failure/anomalous pattern was caused by the suspect factor in past, and if the failure was corrected after modifying the suspect factor in past, and (6) if the failure/anomalous pattern was caused by the suspect factor in the past, and if the failure was corrected after modifying the suspect factor in the past, then the suspect factor and the manner in which the suspect factor was modified is included in the consensus decision.

The process may use both physical and statistical predictive modeling techniques to reach the consensus decision. Additionally, other techniques such as artificial intelligence, historical data analysis, equipment trend information analysis may be used in either singularly or in combination with physical and statistical predictive modeling techniques.

After generating the consensus decision at block 140, the process may, at block 150 estimate the confidence level of the consensus decision. The process may determine, at block 160, whether the estimated confidence level of the consensus decision is above a predetermined threshold value. In other words, unless the consensus decision is trustworthy, the system avoids disclosing the consensus decision to a receiving party.

Alternatively, at block 160, if the process determines that the confidence level of the generated consensus decision does not meet the threshold requirement, then after discarding the generated consensus decision, the process moves back to block 100.

In addition to generating a consensus decision, the system ensures that the generated consensus decision meets or exceeds the confidence level threshold. The disclosed system is designed to avoid issuing a false positive failure notification, by presenting a decision that is based on both the physical analytics model as well as the statistical analytics model.

At block 170, after reporting the trustworthy consensus decision that qualifies a confidence level threshold, the process moves back to block 100 to check and see if the given equipment is running at the given point in time. Accordingly, the process generates increasingly accurate and selectively reported failure notification that is based on a trustworthy consensus decision. From block 100, the process starts yet another iteration of generating a conscience is decision and selectively reporting the trustworthy consensus decision.

Alternatively, in another embodiment of the disclosed invention, the system may indicate the confidence level of the given decision and allow the receiving party to configure the desired confidence level threshold. In this embodiment, the disclosed system may indicate the confidence level threshold, the generated conscience decision and optionally present an option for the receiving party to provide a customized confidence level threshold.

In yet another embodiment of the disclosed invention, the system may alternatively disclose a separate confidence level indicated by the statistical analytics model and the physical analytics model, in addition to disclosing the confidence level of the consensus decision based on the combination of the physical and the statistical analytics model. It may be appreciated that notification of data analysis results derived from physical as well as statistical models would be disclosed in various forms.

The artificial intelligence engine may be configured to monitor anomalous patterns of data. Upon encountering an equipment failure, the artificial intelligence engine may isolate a set of anomalous patterns or combination of patterns that may have caused the equipment failure.

In one embodiment of the disclosed invention, two or more sets of models review or process equipment data; the first being at least one statistical analytics model and the second being at least one physical analytics model. At least one of the statistical models may be based on machine learning and artificial intelligence.

After reviewing equipment data for a given machine, the statistical model may communicate the review analysis results with the CMI. After processing review analysis results from the statistical model, CMI may determine if the reviewed equipment data patterns are indicative of a failure.

If CMI determines that the reviewed machine data patterns are indicative of a failure, CMI conducts a bit switch operation, described in detail below. Likewise, after reviewing equipment data, the physical models may communicate the review analysis results with the CMI. After processing review analysis results from the physical model, CMI may determine if reviewed equipment data patterns are indicative of a failure.

If CMI determines that the reviewed equipment data patterns are indicative of a failure, CMI conducts a bit switch operation. The consensus decision may be generated by a consensus decision-making engine as will be further discussed below. Additionally, the confidence level estimation engine may generate a confidence level indicator for the generated consensus decision.

The process may maintain a database, to store a set of attributes associated with each equipment failure. For example, a name of the failure, a set of associated symptoms that may indicate the given failure, a severity of the given failure, a production impact of the given failure, a set of failures that may be a root cause of or give rise to the given failure, a set of failures that may occur as a result of or is an effect of the given failure, a correlation of the given failure with the other failures, and the like. When considered in aggregate, these factors may determine the weight of a given failure.

Regardless of whether a given failure is detected by a statistical analytics model or a physical analytics model, a situation may arise when the statistical model detects some anomalous patterns but does not detect any specific failure pattern at block 120, and the physical model detects a specific failure pattern at block 130. The process may resolve this the inconsistency resulting from the situation where only one of the two models detect a failure at any given time in a manner described below.

Conversely, the statistical model may not detect anomalous patterns at block 120, and the physical model detects some failure pattern. In this case, the consensus decision making circuitry may generate a consensus decision and estimate a low level of confidence for the generated consensus decision if the weight associated with the detected failure pattern is insignificant.

At block 140, the consensus decision making circuitry may generate a consensus decision for the asynchronous data analysis. Additionally, at block 150, the consensus decision making circuitry may estimate a confidence level for the consensus decision generated at block 140.

In one embodiment of the disclosed invention, if the failure is imminent and critical, then the consensus decision making circuitry may assign low level of confidence to the consensus decision. Alternatively, if the failure is not imminent and critical, then the consensus decision making circuitry may assign high level of confidence to the consensus decision.

In another embodiment of the disclosed invention, if the fiscal impact of a failure is significant, then the consensus decision making circuitry may assign low level of confidence to the consensus decision. Alternatively, if the fiscal impact of a failure is negligible, then the consensus decision making circuitry may assign high level of confidence to the consensus decision.

The process may, at block 160, determine that the confidence level of the consensus decision is above the threshold. In that situation, the consensus decision may be reported at block 170. Depending upon the confidence level threshold' which is to be determined at block 160, the consensus decision may or may not be reported. As described above, only the consensus decisions that qualifies a confidence threshold is reported at block 170.

In one embodiment of the disclosed invention, a configuration management controller may set a value of a bit associated with each monitored parameter to "true" to indicate that the value of the each monitored parameter is within the acceptable range. As soon as the value of a specific parameter falls below the lower range or exceeds above the upper range, the CMI may set the bit for the specific parameter to "false". The CMI may, upon detecting the change in bit value for the specific given parameter, be trained to initiate at least one appropriate escalation procedure to address the bit change.

Additionally, CMI may also be trained, using artificial intelligence, to raise a flag upon noticing the presence of parameters denoting a critical failure, such as critically low fuel level indicator in a mining machine, for example.

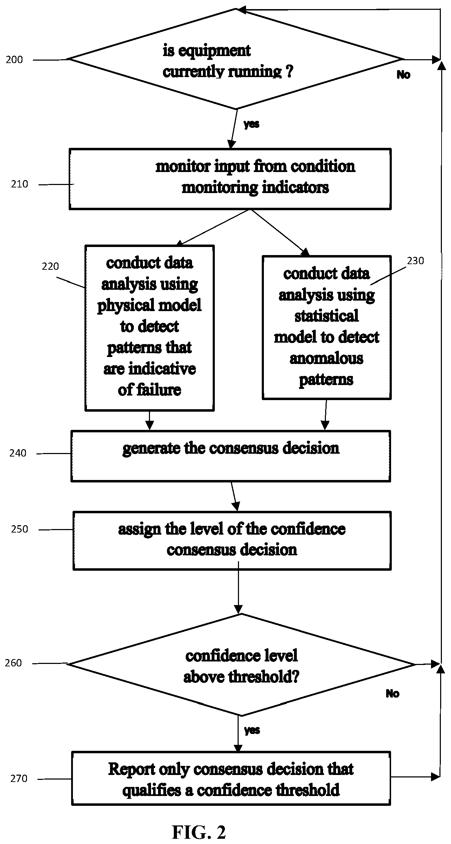

Now referring to FIG. 2, showing process flow according to one embodiment of the disclosed invention. The process begins at block 200 where the system determines if the given equipment is in a running state. If the equipment is running then the process moves to block 210 to for detecting anomaly by monitoring various indicators from condition monitoring software.

In one example of an application using the disclosed process for failure detection, the process may monitor input from CMI at block 210. The process may, at block 230, conduct data analysis using the statistical model to detect anomalous patterns without detecting failure patterns. At block 220, the process may conduct data analysis using the physical model to detect failure patterns.

Using data generated in blocks 220 and 230, the process may generate a consensus decision at block 240. For example, the process determines that the failure is imminent at block 240, and the process may assign a high confidence level to the consensus decision at block 250. In this example, the process may determine that the assigned confidence level is above the threshold at block 260. The process may selectively report qualifying consensus decision at block 270. Otherwise, the process may discard or store disqualified consensus decisions before returning to block 200.

In another example of an application using the disclosed process for failure detection, after conducting data analysis using the statistical model to detect anomalous patterns at block 230, the statistical model may not detect anomalous patterns. However, at block 220, the physical model may detect patterns that are indicative of failure. In this scenario, after generating a consensus decision at block 240, the process may assign a low confidence level for the consensus decision at block 250. The process may determine that the confidence level of the consensus decision is below the required threshold at block 260, and consequently move back to block 200 instead of reporting the consensus decision at block 270.

However, if the process assigns a high confidence level to the consensus decision at block 250, then the process may determine that the confidence level of the consensus decision is above the required threshold at block 260, and consequently report the trusted consensus decision at block 270.

In one embodiment of the disclosed invention, a configuration management controller may set the value of a bit associated with each monitored parameter to "true" to indicate that the value of the each monitored parameter is within the acceptable range. As soon as the value of a specific parameter falls below the lower range or exceeds above the upper range, the CMI may set the bit for the specific parameter to "false". The CMI may, upon detecting the change in bit value for the specific parameter, be trained to initiate at least one appropriate escalation procedure to address the bit change.

CMI may also be trained using artificial intelligence, to raise a flag for a set of critical parameters even before initiating the bit switch operation. The critical parameters may, for example, denote a critical failure, such as critically low fuel level indicator in a mining equipment for example.

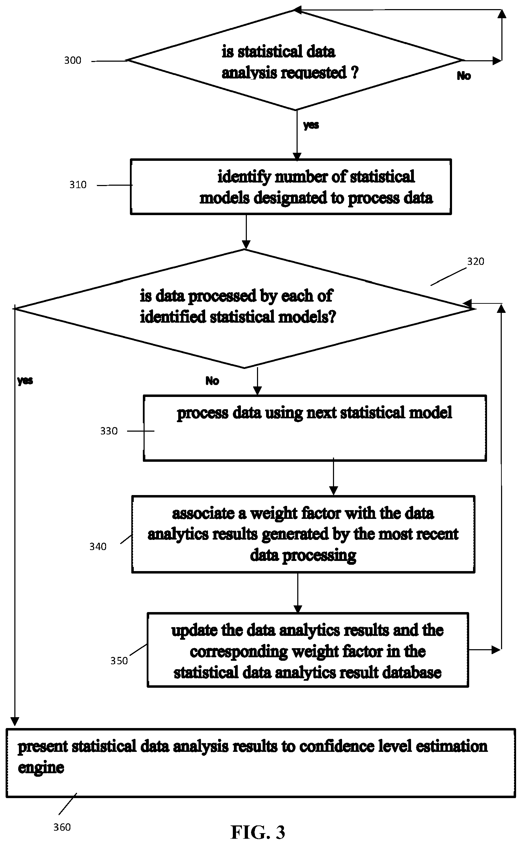

Now referring to FIG. 3, shown is process flow according to another embodiment of the disclosed invention. At block 300, the process determines if the statistical data analysis is requested. If the statistical data analysis is requested, then the process may move to block 310 to determine the number of statistical analytics models that are designated to process data. Additionally, at block 310, the process may identify the statistical data analytics models that are designated to process data. At block 320, the process may determine whether each statistical analytics model designated at block 310 has completed the data processing task.

The process may move to block 360 to present statistical data analysis results to the confidence level estimation engine if each designated statistical analytics model has completed the data processing task. Alternatively, if each designated statistical analytics model has not completed the data processing task, then the process may move to block 330, where the next statistical analytics model may complete the data processing task.

At block 340, the process may associate a weight factor with the data analytics results generated by the most recent data processing performed in step 330. In one embodiment of the disclosed invention, the weight factor may indicate priority associated with the data analytics results. Typically, the data analytics results may contain several instances of possible machine failure. The weight factor may be used to rank the given failure in the list of detected failure indications. This information may be used by the party receiving the failure notification to prioritize a response addressing and curing the given failure.

The process may update data analytics results and the corresponding weight factor in the statistical data analytics result database at block 350, before presenting the statistical data analysis result to confidence level estimation engine at block 360.

FIG. 4 depicts a manner in which physical data analysis is performed. At block 400, the process determines if physical data analysis is requested. If the physical data analysis is requested then the process moves to block 410 to determine the number of physical data analytics models that are designated to process data. Further, the process may identify the physical data analytics models that are designated to process data at block 410.

At block 420, the process determines, if each physical data analytics model identified at block 410 has completed the data processing task. The process may move to block 460 to present the physical data analysis results to the confidence level estimation engine if all designated physical analytics models have completed data processing. Alternatively, if all designated physical analytics models have not completed the data processing task, then the process may move to block 430 to process data using the next physical data analytics model.

At block 440 the process may associate a weight factor with the data analytics results generated by the most recent data processing task performed in step 430. The process may update data analytics results and the corresponding weight factor in the statistical data analytics result database at block 450, before presenting the statistical data analytics results to the confidence level estimation engine at block 460.

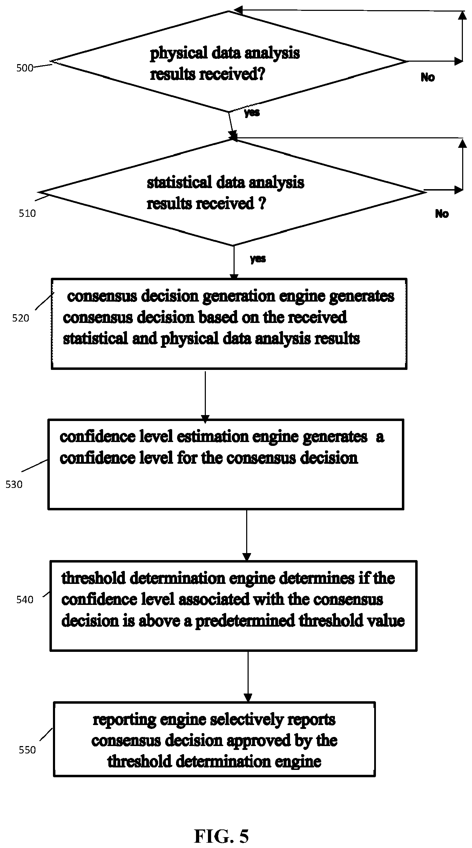

Shown in FIG. 5, depicted is the manner in which statistical data analysis is performed. At block 500, the process may determine if the process has received the physical data analytics results. The process stays at block 500 until the process receives physical data analytics results. Once the physical data analytics results are received, the process may move to block 510.

At block 510, the process may determine if the process has received the statistical data analytics results. The process stays at block 500 until the process receives the statistical data analytics results. Once the statistical data analytics results are received the process may move to block 520.

A consensus decision generation engine generates the consensus decision based on the received physical data analytics results and the statistical data analytics results at block 520. In one embodiment of the disclosed invention, the process may associate a weight with the generated consensus decision. The weight value associated with a consensus decision may indicate a severity of the consensus decision.

A lower weight value associated with a consensus decision may indicate a minor impact resulting from ignoring the consensus decision. Thus, if the lower weight value is associated with the consensus decision, then a user may choose to ignore the consensus decision. Conversely, a higher weight value may indicate a major impact resulting from ignoring the consensus decision. Accordingly, if the higher weight value is associated with the consensus decision, then a user may be advised against ignoring the consensus decision. The manner in which the consensus decision is made is further described in conjunction with Fig 7.

At block 530, the confidence level estimation engine may generate a confidence level for the consensus decision generated at block 520. The threshold determination engine may at block 540, determine whether the confidence level generated in step 530 and associated with the consensus decision is above a predetermined threshold.

The threshold determination engine may selectively approve a set of consensus decisions that has a confidence level above a predetermined threshold. At block 550, the reporting engine may selectively report the consensus decision approved by the threshold determination engine. Accordingly, the process may discard the less credible consensus decisions and selectively report trustworthy consensus decisions.

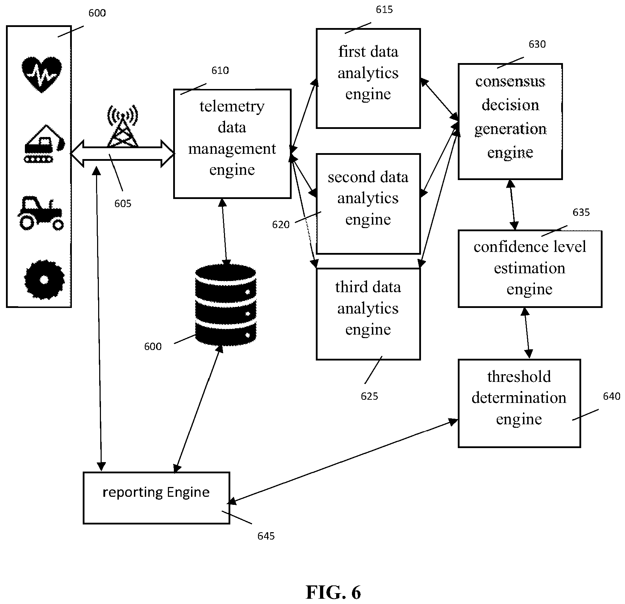

Figure 6 depicts the system diagram according to one embodiment of the disclosed invention. Various types of telemetry data 600 is collected from a remote worksite. For example, equipment health vitals data, equipment component health data, equipment fluid load data, equipment fluid data, equipment configuration data and the like. This telemetry data is typically at the work site and is transmitted from a remote location to a data processing facility. The manner in which data is processed by the disclosed system at the data processing facility is described below.

As described above, upon arrival to the data processing facility, data is received at the telemetry data management engine 610. Data is further distributed from the telemetry data management engine 610 to database 600 and various analytics engines 615, 620, and 625.

Database 600 may store unprocessed telemetry data as well as processed telemetry data. Furthermore, database 600 may also store previously encountered problematic symptoms, previously adopted curative courses of action and associated outcomes. The previously adopted curative course of action may be selectively adopted if the curative course of action resulted in a favorable outcome. Conversely, the operator may selectively eliminate the course of action that did not previously bring about the desired results.

Additionally, database 600 may also contain other databases such as a statistical data analytics database, a physical data analytics database and other similar databases. Telemetry data may be transmitted from the worksite to a remote location via, either a wired Internet connection or a wireless Internet connection 605. Upon arrival at a remote location, data is transmitted to telemetry data management engine 610.

After being stored at database 600, unprocessed telemetry data may be shared with various data analytics engines such as a first data analytics engine 615, a second data analytics engine 620, and a third data analytics engine 625. Even though only three analytics engines, 615, 620 and 625, are shown in FIG. 6, fewer or more analytics engines of various types may be used in various embodiments of the disclosed invention.

The first data analytics engine 615, the second data analytics engine 620, and the third data analytics engine 625, each may process telemetric data and store processed data via telemetry data management engine 610 at database 600. Additionally, processed data is also sent to consensus decision generation engine 630.

In one embodiment of the disclosed invention, the consensus decision generation engine 630 may generate a consensus decision based on the received physical data analytics results and statistical data analytics results. The consensus decision generation engine 630 may associate a weight with the consensus decision, wherein the weight value associated with a consensus decision may indicate the severity of the impact of ignoring the consensus decision.

The physical data analysis results are presented to confidence level estimation engine 635 after each designated physical data analytics model completes the data processing task. Confidence level estimation engine 635 may generate a confidence level for the consensus decision. A threshold determination engine 640 may determine if the confidence level associated with the consensus decision generated is above a predetermined threshold.

The threshold determination engine 640 may selectively approve consensus decisions that have confidence level above a predetermined threshold. Additionally, threshold determination engine 640 may communicate the approved consensus decisions to the reporting engine 645. The reporting engine 645 may report the consensus decisions approved by the threshold determination engine 640.

### Industrial Applicability

Now referring to FIG. 7 shown is a manner in which a set of related parameters is processed. At block 700, data such as equipment sensor data, equipment historical trend data, customer data, site data, etc. is stored in a data store. For each parameter, an associated upper threshold value and a lower threshold value is also stored in the database.

At block 710, the process identifies, based at least on equipment sensor data, out of bound parameters. The value of out of bound parameters may typically fall outside the configured threshold value range. In other words, the value of each out of bound parameter may either be less than the lower threshold value or greater than the upper threshold value.

Additionally, at block 710, the process identifies a set of related parameters. In one embodiment of the disclosed invention, the related parameters are a set of parameters, wherein, altering the value of one parameter results in altering the value of each parameter in the set of related parameters. Artificial intelligence engine may be programmed to iteratively identify the nested sets of related parameters, and not only to predict the possible failures but also to determine avenues to cure the condition that caused the failure.

At block 720, the process determines whether each parameter in the set of related parameters is processed. The processing at block 730 comprises identifying a set of suspect conditions for each parameter in the set of related parameters. The set of suspect conditions may have caused threshold violation for the given parameter. In one embodiment of the disclosed invention, the process may execute a curative action to overcome threshold violation. The process may conduct a search to identify curative action by traversing the data store.

Even though the aforementioned description recites identifying and overcoming threshold violations, it shall be appreciated that violations other than threshold violations may be processed in a similar fashion.

In one embodiment of the disclosed invention the system may use a bit switch to detect an event when a given parameter value experiences a threshold violation for the first time. The process may identify from the data store a set of modified parameters for the bit switch detected. Additionally, the process may identify a set of related parameters for each parameter in the set of related parameters. Altering the value of one parameter results in altering the value of other parameters in the set of related parameters. Before exiting to block 740 all parameters affected by the condition causing the bit switch for a given parameter are identified and curative action is taken to reverse the bit switch. In another embodiment of the disclosed invention, the process may merely notify user of the threshold violation and not bother taking curative action. In this embodiment, a bit switch operation may be performed once the user is notified of the threshold violation.

In one embodiment of the disclosed invention, the system may process using the physical analytics model with each parameter in the set of related parameters gathering physical data for each parameter in the set of related parameters. Physical data may comprise upper threshold boundary, lower threshold boundary, bit state information and other similar attributes. Then, the system may, using artificial intelligence, process physical data associated with each parameter in the set of related parameters to identify patterns that are indicative of failure.

Further, using the statistical analytics model, the system may process each parameter in the set of related parameters to compare statistical data for the given parameter with statistical data for the set of related parameters. Notably, the statistical data may comprise historical trends for parameters such as: upper threshold boundary, lower threshold boundary, the moving average, correlation coefficients, parameters of a statistical distribution, bit state information, and other similar attributes. The statistical analysis may identify a set of suspect parameters that may have historically caused the threshold boundary violation and may identify anomalous patterns based on the statistical data analysis.

Accordingly, the statistical analytics engine may identify for each bit switch, a set of suspect parameters which may have caused the bit switch. After conducting the physical analytics operation and the statistical analytics operation, the system may generate a consensus decision and indicate a degree of confidence in the consensus decision.

The system may determine the confidence level by identifying a first weight associated with consensus decision by processing the related parameters and the suspect parameters through the statistical analytics model. Likewise, by processing the related parameters and the suspect parameters through the physical analytics model the system may identify a second weight associated with the consensus decision. Furthermore, by processing the related parameters and the suspect conditions through the artificial intelligence engine, the system may identify a third weight associated with the consensus decision. Ultimately, the system may calculate the weight for the consensus decision by aggregating the first weight, the second weight and the third weight.

It will be appreciated that the foregoing description provides examples of the disclosed system and technique. However, it is contemplated that other implementations of the disclosure may differ in detail from the foregoing examples. All references to the disclosure or examples thereof are intended to reference the particular example being discussed at that point and are not intended to imply any limitation as to the scope of the disclosure more generally. All language of distinction and disparagement with respect to certain features is intended to indicate a lack of preference for those features, but not to exclude such from the scope of the disclosure entirely unless otherwise indicated.

Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context.

The use of the terms "a" and "an" and "the" and "at least one" and similar referents in the context of describing the invention (especially in the context of the following claims) are to be construed to cover both the singular and the plural, unless otherwise indicated herein or clearly contradicted by context. The use of the term "at least one" followed by a list of one or more items (for example, "at least one of A and B") is to be construed to mean one item selected from the listed items (A or B) or any combination of two or more of the listed items (A and B), unless otherwise indicated herein or clearly contradicted by context. Accordingly, this disclosure includes all modifications and equivalents of the subject matter recited in the claims appended hereto as permitted by applicable law. Moreover, any combination of the above-described elements in all possible variations thereof is encompassed by the disclosure unless otherwise indicated herein or otherwise clearly contradicted by context.

Embodiments of the disclosure will now be set out with reference to the following numbered clauses in which:
1. A computer implemented method for predicting equipment failure by monitoring equipment data, the method comprising:
   generating a first set of predictions by processing equipment data via a plurality of first models of data analysis and machine learning techniques;
   generating a second set of predictions by processing equipment data via a plurality of second models of data analysis and machine learning techniques;
   generating, using machine learning techniques, a consensus decision by comparing the first set of predictions and the second set of predictions;
   estimating, using machine learning techniques, a level of confidence for the consensus decision; and
   selectively disclosing the consensus decision qualifying a confidence threshold.
2. The method of clause 1, wherein the plurality of first models of data analysis is a statistical model of data analysis including machine learning (ML) and artificial intelligence (AI) models.
3. The method of clause 2, wherein the statistical model of data analysis conducts data analysis based at least on an event start time, an event end time, an event duration time, an event outcome, an event probability, and an occurrence of a connected event.
4. The method of clause 3, wherein the plurality of second models of data analysis is a physical model of data analysis.
5. The method of clause 4, wherein the consensus decision is generated after comparing the first set of predictions and the second set of predictions.
6. The method of clause 1, wherein the first set of predictions is generated by a first model of data analysis and the second set of predictions is generated by the plurality of second models of data analysis.
7. The method of clause 6, wherein the first set of predictions is generated by the plurality of first models of data analysis and the second set of predictions is generated by a second models of data analysis.
8. The method of clause 6, further comprises selectively disclosing to a receiving party the consensus decision qualifying a confidence threshold.
9. The method of clause 8, wherein selectively disclosing the consensus decision comprises not disclosing predictions of physical model data analysis results and statistical data analysis results.
10. A computer-implemented method for reducing false positive notifications from an event detection system using artificial intelligence, comprising:
   receiving telemetric data from a source;
   at a processor, generating a first data by processing the received telemetric data, wherein the first data is generated by a first data model using a first logic;
   at the processor, generating a second data by processing the received telemetric data, wherein the second data is generated by a second data model, using a second logic, wherein the first logic is distinct(disjoint) from the second logic;
   at the processor, generating a third data by processing the first and the second data, wherein the third data is generated by an ensemble data model, using a third logic, wherein the third logic is distinct(disjoint) from the second logic.

## Claims

1. A computer-implemented method for reducing false positive notifications from an event detection system using artificial intelligence, comprising:
receiving telemetric data from a source;
at a processor, generating a first data by processing the received telemetric data, wherein the first data is generated by a first data model using a first logic;
at the processor, generating a second data by processing the received telemetric data, wherein the second data is generated by a second data model, using a second logic, wherein the first logic is distinct (disjoint) from the second logic;
at the processor, generating a third data by processing the first and the second data, wherein the third data is generated by an ensemble data model, using a third logic, wherein the third logic is distinct (disjoint) from the second logic.

2. The method of claim 1, wherein the first data model is a statistical model of data analysis including machine learning (ML) and artificial intelligence (AI) models.

3. The method of claim 2, wherein the statistical model of data analysis conducts data analysis based at least on an event start time, an event end time, an event duration time, an event outcome, an event probability, and an occurrence of a connected event.

4. The method of any preceding claim, wherein the second data model is a physical model of data analysis.

5. The method of claim 4, wherein third data comprises a consensus decision which is generated after comparing the first data and the second data.

6. The method of any preceding claim, wherein the first data is a first set of predictions and the second data is a second set of predictions

7. The method of claim 6, wherein the first set of predictions is generated by a plurality of first data models and the second set of predictions is generated by a plurality of second data models.

8. The method of claim 5, further comprising selectively disclosing to a receiving party the consensus decision qualifying a confidence threshold.

9. The method of claim 8, wherein selectively disclosing the consensus decision comprises not disclosing predictions of physical model data analysis results and statistical data analysis results.

10. The method of any preceding claim, wherein
the telemetric data comprises one or more of: equipment health vitals data, equipment component health data, equipment fluid load data, equipment fluid data, equipment configuration data.
